# EUROPEAN PATENT APPLICATION

(11) **EP 1 873 677 A1**
(43) Date of publication of application: **02.01.2008**
(21) Application number: 06730992.2
(22) Date of filing: 03.04.2006
(51) Int. Cl.: G06F 21/22

(54) **MOBILE DEVICE, PATTERN FILE UPDATE METHOD, AND COMMUNICATION SYSTEM**

(30) Priority: 07.04.2005 JP 2005111316
(71) Applicant: NTT DoCoMo INC., Chiyoda-ku Tokyo 100-6150 (JP)
(72) Inventor: FUJITA, Masanori, Int.Prop.Dept., NIT DoCoMo Inc., Tokyo 1006150 (JP); URAKAWA, Yasutaka, Int.Prop.Dept., NIT DoCoMo Inc., TTokyo 1006150 (JP); ASANO, Koichi, Int.Prop.Dept., NIT DoCoMo Inc., Tokyo1006150 (JP); SEUNG, Hyunsuk, Int.Prop.Dept., NIT DoCoMo Inc., Tokyo 1006150 (JP); ICHINOSE, Akihiro, Int.Prop.Dept., NIT DoCoMo Inc., Tokyo 1006150 (JP); HAYASHI, Takeshi, Int.Prop.Dept., NIT DoCoMo Inc., Tokyo 1006150 (JP)
(74) Representative: Grosse, Wolfgang
(86) International application number: PCT/JP2006/307044
(87) International publication number: WO 2006/109605

(57) **Abstract**

A mobile device comprises an e-mail receiver for receiving an e-mail indicating that a pattern file for virus disinfection can be updated; an e-mail determination unit for determining model information described in the e-mail received by the e-mail receiver; and a file updater for acquiring a pattern file corresponding to the model information, when the e-mail determination unit determines that the model information related to the mobile device is described.

## Description

### Technical Field

A present invention relates to a mobile device, pattern file update method, and communication system for updating a pattern file for a virus check.

### Background Art

The file delivery system disclosed in Patent Literature 1 is known as technology for regularly updating a pattern file for virus checks (virus disinfections). The Patent Literature 1 discloses that, in this file delivery system, the user side (a security device) requests a server for a pattern file update for a virus check.
"Patent Literature 1" is Japanese Patent Application Laid-Open Gazette of JP 2004-220190.

### Disclosure of the Invention

### Problem to be Solved by the Invention

However, in the file system disclosed in the above-mentioned Patent Literature 1, because the user-side terminal requests a pattern file update for a virus check, unnecessary update requests can be made. For example, in the file system disclosed in Patent Literature 1, after making an update request, the user-side terminal checks a version of the pattern file, and determines whether or not pattern file update processing is necessary based on the version. When the user-side terminal determines that update processing is not necessary, the pattern file is not acquired, resulting in wasted processing.

Accordingly, an object of the present invention is to provide a mobile device, pattern file update method, and communication system, which efficiently carry out pattern file update processing for a virus check.

### Means for Solving the Problem

To solve for the problem stated above, a mobile device of the present invention comprises electronic mail (e-mail) reception module for receiving an e-mail showing that a pattern file for virus disinfection can be updated; model determination module for determining model information described in the e-mail received via the above-mentioned e-mail reception module; and file acquisition module for acquiring a pattern file corresponding to the above-mentioned model information when determination is made, by the above-mentioned model determination module, that the model information related to the mobile device is described.

Further, a pattern file update method of the present invention comprises an e-mail reception step of receiving an e-mail showing that a pattern file for virus disinfection can be updated; a model determination step of determining the model information described in the e-mail received in the above-mentioned e-mail reception step; and a file acquisition step of acquiring a pattern file corresponding to the above-mentioned model information when determination is made, in the above-mentioned model determination step, that the model information related to the mobile phone is described.

Further, a communication system of the present invention is a communication system, which comprises a server for storing a pattern file for virus disinfection and for delivering this pattern file, and a plurality of mobile devices, which acquire the pattern file from the above-mentioned server, wherein the above-mentioned server comprises delivery module for delivering to the above-mentioned plurality of mobile devices an e-mail, which describes information showing that a pattern file for virus disinfection can be updated, and model information showing the model to be updated, when the above-mentioned server has stored the above-mentioned pattern file anew, and the above-mentioned mobile devices comprise e-mail reception module for receiving an e-mail delivered from the above-mentioned server; model determination module for determining the model information described in the e-mail received by the above-mentioned e-mail reception module; and file acquisition module for acquiring a pattern file corresponding to the above-mentioned model information when determination is made, by the above-mentioned model determination module, that the model information related to the mobile device is described.

According to this invention, a mobile device can receive an e-mail showing that a pattern file for virus disinfection can be updated, can determine the model information described in the received e-mail, and can acquire a pattern file corresponding to model information related to the mobile device based on the determined results. Consequently, a pattern file can be updated in a mobile device without carrying out pattern file update processing by a user on the user's volition. Further, a mobile device can determine whether or not to update a pattern file, and can carry out pattern file acquisition processing based on the model information described in the e-mail, making it possible to efficiently carry out pattern file update processing. Furthermore, the server, which provides the pattern file, can reduce the need to individually determine whether or not a mobile device should update a pattern file, and can reduce the processing for pattern file updating by simply sending an e-mail to all the mobile devices that the server manages.

Further, it is desirable that a mobile device of the present invention further comprise status determination module for determining whether or not the mobile device is in a state in which pattern file acquisition processing can be carried out by the above-mentioned file acquisition module; and reporting module for issuing a report to the effect that a pattern file update has not been performed when the above-mentioned status determination module determines that the mobile device is not in a state in which pattern file acquisition processing can be carried out.

According to this invention, a user can be quickly informed that pattern file acquisition is not possible by status determination module determining that the mobile device is in a state in which pattern file acquisition processing is not possible, and reporting module issuing a report to that effect. Accordingly, it is possible to reduce the likelihood of a mobile device being infected by a virus.

### Effect of the Invention

The present invention makes it possible to receive an e-mail showing that a pattern file for virus disinfection can be updated, determine the model information described in the received e-mail, and acquire a pattern file corresponding to model information related to the mobile device based on the determined results. Consequently, a pattern file can be updated in a mobile device without carrying out pattern file update processing by a user on the user's volition. Further, a mobile device can determine whether or not to update a pattern file and can carry out pattern file acquisition processing based on the model information described in the e-mail, making it possible to efficiently carry out pattern file update processing. Furthermore, the server, which is on the provider side and provides a pattern file, can reduce the need to individually determine whether or not a mobile device should update a pattern file, and can reduce the processing for pattern file updating by simply sending an e-mail to all the mobile devices.

### Brief Description of the Drawings

Fig. 1 is a system configuration diagram showing the network system for an embodiment.
Fig. 2 is a block diagram of a mobile device 100.
Fig. 3 is a conceptual diagram showing the data format of an e-mail.
Fig. 4 is an explanatory diagram showing a concrete example of e-mail data.
Fig. 5 is a flowchart showing the operations of the mobile device 100.

### Description of Reference Symbols

100 is for mobile device; 101 is for wireless communication unit; 102 is for e-mail receiver; 103 is for e-mail determination unit; 104 is for status determination unit; 105 is for file updater; 106 is for pattern file storage; 107 is for scanner; 108 is for display; 109 is for application controller; 110 is for application storage; 111 is for external device connector; 112 is for call unit; 200 is for push delivery server; 300 is for pattern file delivery server; 400 is for mail server; 500 is for web server.

### Best Mode for Carrying out the Invention

The present invention can be readily understood by referring to the attached figures provided for one embodiment, and taking into account the following detailed description. An embodiment of the present invention will be explained next while referring to the attached figures. The same reference numerals will be used to describe the same units, if possible, and duplicate explanations will be omitted.

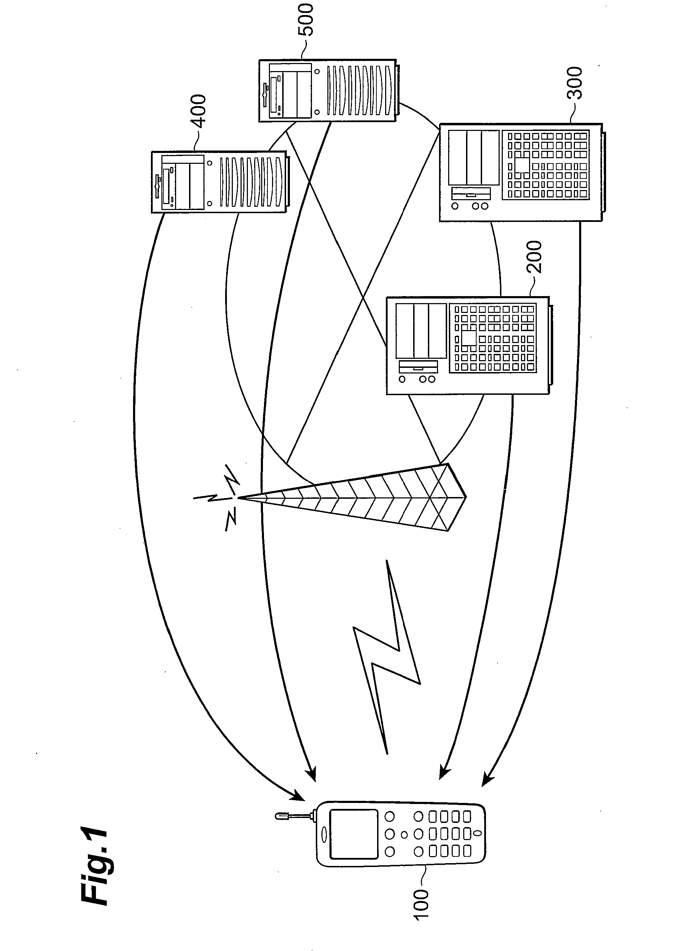

Fig. 1 is a system configuration diagram showing the network system in this embodiment. The network system in this embodiment comprises a mobile device 100, a push delivery server 200, a pattern file delivery server 300, a mail server 400, and a WEB server 500.

The push delivery server 200 delivers a notification e-mail showing that updating is possible in the mobile device 100, to the plurality of mobile devices 100 managed by the push delivery server 200 over the network, when a new pattern file for a virus check (virus disinfection) is stored in accordance with an operator input operation. Furthermore, model information of the mobile device, which should update the pattern file, is described in this notification e-mail. Accordingly, the push delivery server 200 comprises delivery module for delivering a notification e-mail, which shows that updating is deemed possible in the mobile device 100.

The mobile device 100, which receives this notification e-mail, determines whether or not the contents of the pattern file notification e-mail conform to the model of the mobile device 100. When the mobile device 100 determines that the contents conform to the model of the mobile device 100, the mobile device 100 makes a pattern file request to the pattern file delivery server 300, and acquires the pattern file. The mobile device 100 uses the acquired pattern file to carry out a virus check to determine whether or not e-mail data obtained from the mail server 400, or WEB data (HTML files and so forth) acquired from the WEB server 500 are virus-containing data.

Thus, the mobile device 100 receives the notification e-mail from the push delivery server 200, and acquires the pattern file from the pattern file delivery server 300 in accordance with this notification e-mail, thereby making it possible to efficiently acquire the pattern file without carrying out wasted pattern file update processing. The mobile device 100 and its operations will be explained in detail hereinbelow.

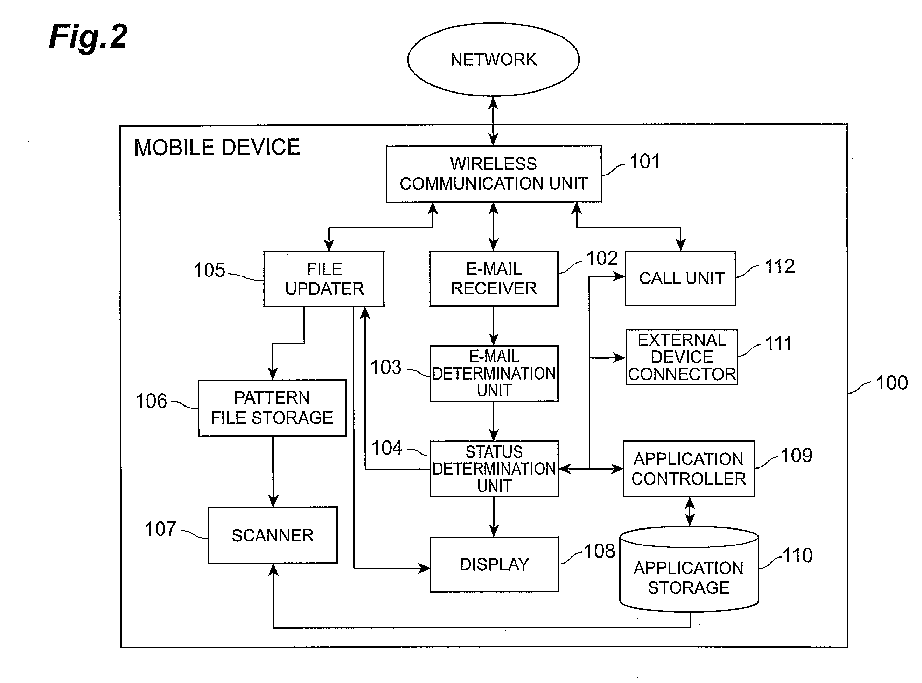

Fig. 2 is a block diagram of the mobile device 100. The mobile device 100 comprises a wireless communication unit 101, an e-mail receiver 102 (e-mail reception module), an e-mail determination unit 103 (model determination module), a status determination unit 104 (status determination module), a file updater 105 (file acquisition module), a pattern file storage 106, a scanner 107, a display 108, an application controller 109, an application storage 110, an external device connector 111, and a call unit 112. The respective constitutions will be explained below.

The wireless communication unit 101 communicates with the radio base stations which make up a mobile telephone network. This wireless communication unit 101 can be used to carry out the transmitting and receiving of e-mails, telephone calls, and pattern file acquisition processing.

The e-mail receiver 102 receives an e-mail, and outputs the received e-mail to the e-mail determination unit 103 for determining the type of the received e-mail. Furthermore, an e-mail in this embodiment is used as a concept which covers means that is capable of digitizing text, graphics and so forth and sending these to a specific destination, and comprises so-called Internet e-mail utilized between personal computers and mobile devices, and short message services and multimedia message services which are utilized between mobile devices.

The e-mail determination unit 103 determines the type of the e-mail inputted from the e-mail receiver 102. More specifically, the e-mail determination unit 103 determines if the e-mail is a notification e-mail (the notification e-mail from the push delivery server 200) for the update processing of a pattern file for a virus check, or if the e-mail describes what model type requires pattern file update processing, and also determines whether or not pattern file update processing is needed. Upon determining that pattern file update processing will be carried out, the e-mail determination unit 103 outputs information to this effect to the status determination unit 104.

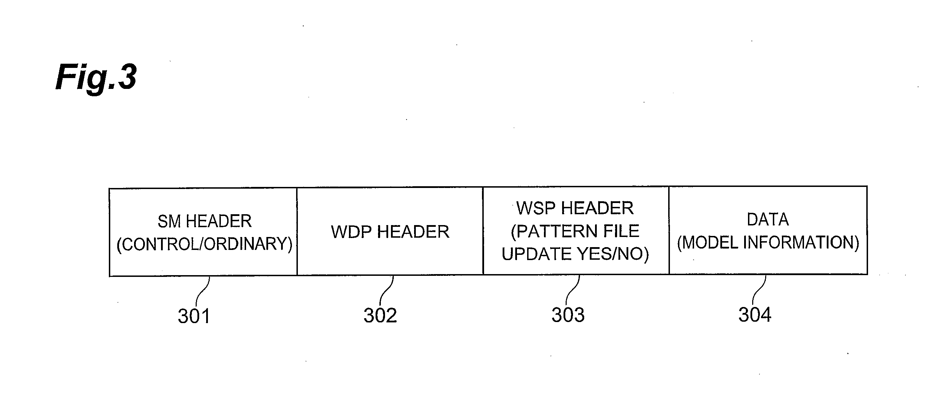

Details concerning the determination process of the e-mail determination unit 103 will be explained here. Fig. 3 is a conceptual diagram showing the data format of an e-mail, and this data format is the one used when employing a short message service (SMS).

An SM header 301 is the header portion, which depicts the type of e-mail, and is for distinguishing an ordinary e-mail from a control e-mail.

A WDP header 302 is the header portion in which the port number for a communication is described.

A WSP header 303 is the header portion, which has a header length, a content type, and an extension header, and in this embodiment, identification information showing whether or not an e-mail was delivered from the push delivery server 200 is described in the extension header.

Data 304 is the part in which the e-mail message is described.

In a short message service constituted like this, a determination is made by the e-mail determination unit 103 based on the SM header 301 as to whether an e-mail is an ordinary e-mail or a control e-mail (for example, a notification e-mail). Further, when the e-mail determination unit 103 has determined that the identification information described as the extension header of the WSP header 303 is identification information showing that an e-mail has been delivered from the push delivery server 200, that is, identification information showing that the e-mail is for notifying a pattern file update, the e-mail determination unit 103 checks the terminal type identification information based on terminal type identification information 304c and 304d described in the data 304.

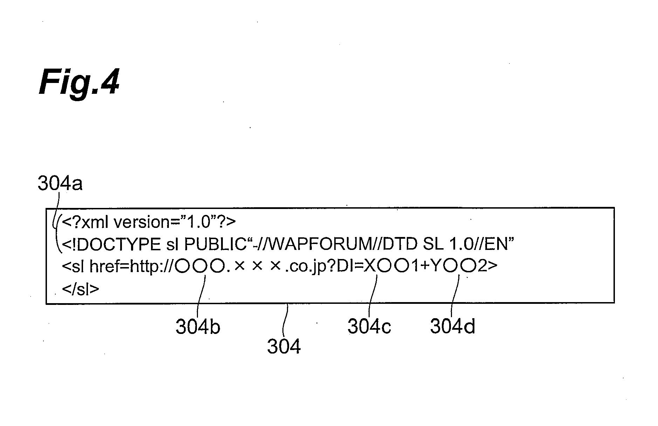

A specific example of the data 304 is shown in Fig. 4. Fig. 4 is an explanatory diagram showing a specific example of e-mail data. As shown in Fig. 4, the e-mail comprises an e-mail header part 304a, identification information for checking use 304b, terminal type identification information 304c, and terminal type identification information 304d.

The identification information for checking use 304b is information provided by the push delivery server 200, and the mobile device 100 can use this information to determine the validity of an e-mail. Terminal type identification information 304c and 304d is information showing the model type requiring pattern file updating.

The e-mail determination unit 103 compares this terminal type identification information 340c and 304d against terminal type identification information set inside the mobile device 100 itself, and determines whether or not there is a match. When the determination by the e-mail determination unit 103 here is that there is a match between the terminal type identification information 340c and 304d and the pre-stored terminal type identification information, a pattern file update process, which will be described hereinbelow, is executed. Furthermore, in this embodiment, two pieces of terminal type identification information, terminal type identification information 340c and 304d, are described in the data 304, but it is not necessary to describe two pieces of terminal type identification information, and either one piece of terminal type identification information or more than two pieces of terminal type identification information can be described instead.

Returning to Fig. 2, the status determination unit 104 ascertains the status of the mobile device 100 itself, and determines whether or not pattern file update processing is possible, prior to pattern file update processing being carried out. More specifically, the status determination unit 104 determines if the mobile device 100 is in a call-in-progress state using the call unit 112, a state in which the external device connector 111 is connected and communicating, or an application startup state using the application controller 109, and determines whether or not pattern file update processing can be carried out. For example, when the mobile device 100 is in a call-in-progress state using the call unit 112, a communication state using the external device connector 111, or an application startup state using the application controller 109, the status determination unit 104 determines that update processing is not possible, and when the mobile device 100 is determined not to be in any of the above call-in-progress state, communication state, or application startup state, the status determination unit 104 determines that update processing is possible. Then, when the status determination unit 104 determines that the mobile device 100 is not in any of the above call-in-progress status, communication status, or application startup status, and that update processing is possible, the status determination unit 104 notifies the file updater 105 to this effect.

The file updater 105 carries out processing for fetching a pattern file from the pattern file delivery server 300 using the wireless communication unit 101, and acquires the relevant pattern file by notifying the pattern file delivery server 300 of the mobile device 100 model information. The file updater 105 updates the acquired pattern file to the pattern file storage 106.

The pattern file storage 106 stores the pattern file outputted from the file updater 105.

The scanner 107 carries out a check process for determining whether or not a virus is contained in an application or the like stored in the mobile device 100, and gets rid of the virus program in question. The scanner 107 carries out a check process in accordance with the pattern file stored in the pattern file storage 106 to determine the presence or absence of a virus or the like corresponding to the pattern file, and carries out disinfection by deleting the virus program.

The display 108 displays information on mobile device 100 operations, and when it has been determined by the status determination unit 104 that update processing cannot be executed, or when pattern file update processing by the file updater 105 results in an error, displays a message so that pattern file updating will be carried out.

The application controller 109 controls applications stored in the application storage 110.

The application storage 110 stores applications.

The external device connector 111 is for connecting the mobile device 100 to an external device, and the mobile device 100 can communicate with the external device via the external device connector 111.

The call unit 112 carries out wireless telephone calls using the wireless communication unit 101.

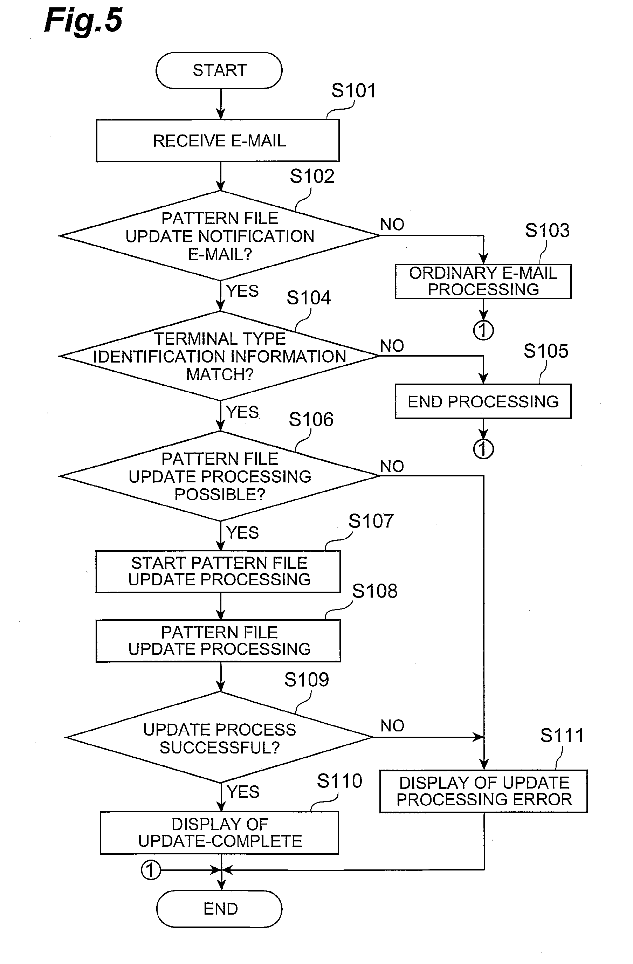

The operation of the thus constituted mobile device 100 will be explained. Fig. 5 is a flowchart showing the operations of the mobile device 100.

An e-mail sent from the push delivery server 200 is received by the e-mail receiver 102 (S101). A determination is made by the e-mail determination unit 103 as to whether the received e-mail is a pattern file update notification e-mail (S102). More specifically, in the short message service data format shown in Fig. 3, when identification information indicating that an e-mail is a control e-mail (refer to Fig. 3) is described in the SM header 301, and identification information indicating that an e-mail is a notification e-mail for a pattern file update (refer to Fig. 3) is described in the WSP header 303, the e-mail determination unit 103 determines that the e-mail is a notification e-mail for a pattern file update.

In S102, when the e-mail received by the e-mail receiver 102 is not a pattern file update notification e-mail, the e-mail determination unit 103 determines that the e-mail is an ordinary e-mail, and carries out ordinary e-mail processing (S103). Ordinary e-mail processing as used here refers to receiving an e-mail and storing it temporarily, notifying the user that an e-mail has been received, and displaying the received e-mail in response to a user operation.

When the determination by the e-mail determination unit 103 in S 102 is that the e-mail received by the e-mail receiver 102 is a pattern file update notification e-mail, the e-mail determination unit 103 then determines if the terminal type identification information 304c (terminal type identification information 304d), which is described in the data 304 thereof, matches the terminal type identification information of the mobile device 100 itself (pre-stored in the mobile device 100) (S104).

In S104, when the e-mail determination unit 103 determines that the terminal type identification information 304c (terminal type identification information 304d) does not match the terminal type identification information of the mobile device 100 itself, the e-mail determination unit 103 ends processing, and transitions to standby status (S105).

In S104, when the e-mail determination unit 103 determines that the terminal type identification information 304c (terminal type identification information 304d) does match the terminal type identification information of the mobile device 100 itself, the status determination unit 104 determines whether or not pattern file update processing is capable of being executed (S 106). More specifically, the status determination unit 104 determines whether or not pattern file update processing can be executed by determining if the mobile device 100 is in a call-in-progress state using the call unit 112, a state in which the external device connector 111 is connected and communicating, or an application startup state using the application controller 109. For example, when the mobile device 100 is in a call-in-progress state using the call unit 112, a communication state using the external device connector 111, or an application startup state using the application controller 109, the status determination unit 104 determines that update processing is not possible, and when the mobile device 100 is determined not to be in any of the above call-in-progress state, communication state, or application startup state, the status determination unit 104 determines that update processing is possible.

In S106, when the status determination unit 104 determines that pattern file update processing can be executed, the file updater 105 starts the pattern file update process, accesses the pattern file delivery server 300, and requests delivery of a pattern file (S107). The corresponding pattern file can be requested at this point by sending the pattern file delivery server 300 the terminal type identification information at access time. Then, the pattern file is delivered from the pattern file delivery server 300, and the pattern file is stored in the pattern file storage 106 by the file updater 105 (S 108).

When the file updater 105 determines that pattern file update processing by the file updater 105 has ended normally (S109), the fact that pattern file updating has ended normally is displayed on the display 108 for the user (S 110). Furthermore, after pattern file updating ends, the scanner 107 can use the updated pattern file to carry out a virus check. Consequently, a virus check is carried out using the latest pattern file, enabling virus disinfection to be performed, and making it possible to enhance anti-virus security.

In S106, when the status determination unit 104 determines that pattern file update processing can not be carried out, or when the file updater 105 was not able to end pattern file update processing normally in S109 (for example, there was a network error, or the mobile device 100 traveled outside the wireless communication area), a message to the effect that pattern file updating could not be ended, or to the effect that pattern file updating is necessary, is displayed on the display 108 (S111). The user can view this display, and carry out a pattern file update process manually.

Next, the operational advantage of the mobile device 100 and push delivery server 200, as well as the communication system comprising this mobile device 100 and push delivery server 200 of this embodiment will be explained.

In the mobile device 100 of this embodiment, the e-mail receiver 102 can receive an e-mail indicating that a pattern file for virus disinfection can be updated, the e-mail determination unit 103 can determine the model information described in the received e-mail, and the file updater 105 can acquire a pattern file corresponding to the model information of the mobile device 100 based on the determination result. Consequently, a pattern file can be updated in the mobile device 100 without the user carrying out pattern file update processing on his own volition. Further, in the mobile device 100, the e-mail determination unit 103 can determine whether or not to update a pattern file based on the model information described in the e-mail, and the file updater 105 can carry out pattern file acquisition processing, making it possible for pattern file update processing to be carried out efficiently. Furthermore, the push delivery server 200, which is the provider side that provides the pattern file, can reduce the need to individually determine whether or not a mobile device should update a pattern file, and can reduce the processing for pattern file updating by simply sending an e-mail to all the mobile devices that the push delivery server 200 manages.

Further, in the mobile device 100 of this embodiment, the status determination unit 104 can determine if the mobile device 100 is in a state in which pattern file acquisition processing is not possible, and can quickly inform the user that pattern file acquisition is not possible by issuing a report to this effect by displaying an error message on the display 108. Accordingly, the likelihood of a mobile device 100 being infected by a virus can be reduced.

### Industrial Applicability

The present invention is utilized for a mobile device, a pattern file update method, and a communication system, which carry out pattern file updating for a virus check, and makes it possible to efficiently perform pattern file update processing.

## Claims

1. A mobile device, comprising:
e-mail reception module for receiving an e-mail showing that a pattern file for virus disinfection can be updated;
model determination module for determining model information described in the e-mail received via the e-mail reception module; and
file acquisition module for acquiring a pattern file corresponding to the model information when determination is made, by the model determination module, that the model information related to the mobile device is described.

2. The mobile device according to Claim 1, further comprising:
status determination module for determining whether or not the mobile device is in a state in which pattern file acquisition processing can be carried out by the file acquisition module; and
reporting module for issuing a report to the effect that a pattern file update has not been performed when the status determination module determines that the mobile device is not in a state in which pattern file acquisition processing can be carried out.

3. A pattern file update method, comprising:
an e-mail reception step of receiving an e-mail showing that a pattern file for virus disinfection can be updated;
a model determination step of determining model information described in the e-mail received in the e-mail reception step; and
a file acquisition step of acquiring a pattern file corresponding to the model information when determination is made in the model determination step that the model information related to the mobile device is described.

4. A communication system comprising: a server for storing a pattern file for virus disinfection and for delivering this pattern file; and a plurality of mobile devices which acquire a pattern file from the server,
the server comprising:
delivery module for delivering to the plurality of mobile devices an e-mail, which describes information showing that a pattern file for virus disinfection can be updated, and model information showing a model to be updated, when the pattern file has been stored anew, and
the mobile devices comprising:
e-mail reception module for receiving an e-mail delivered from the server;
model determination module for determining model information described in the e-mail received by the e-mail reception module; and
file acquisition module for acquiring a pattern file corresponding to the model information when determination is made, by the model determination module, that model information related to the mobile device is described.
